Europäisches Patentamt

European Patent Office

Office européen des brevets

(11) Numéro de publication : **0 334 727 B1**

## (12) FASCICULE DE BREVET EUROPEEN

(45) Date de publication du fascicule du brevet :
**09.06.93 Bulletin 93/23**

(51) Int. Cl.$^5$ : **C01G 25/02**

(21) Numéro de dépôt : **89400730.1**

(22) Date de dépôt : **16.03.89**

(54) **Oxyde de zirconium réactif et sa préparation.**

(30) Priorité : **22.03.88 FR 8803680**

(43) Date de publication de la demande :
**27.09.89 Bulletin 89/39**

(45) Mention de la délivrance du brevet :
**09.06.93 Bulletin 93/23**

(84) Etats contractants désignés :
**DE ES FR GB IT**

(56) Documents cités :
**EP-A- 0 131 774**
**EP-A- 0 334 713**
**EP-A- 0 334 732**
**FR-A- 714 284**
**FR-A- 1 602 548**
**US-A- 3 254 949**
**Gmelins Handbuch der Anorg. Chemie, 8. ed.,**
**42, page 217**

(73) Titulaire : **SOCIETE EUROPEENNE DES PRODUITS REFRACTAIRES**
**Les Miroirs 18, Avenue d'Alsace**
**F-92400 Courbevoie (FR)**

(72) Inventeur : **Recasens, Joseph**
**24 Rue Saint Hubert**
**F-84700 Sorgues (FR)**
Inventeur : **Urffer, Daniel**
**5 Rue Paul Signac**
**F-84310 Morières les Avignon (FR)**
Inventeur : **Ferlanda, Pierre**
**Route de Carpentras**
**F-84310 Le Pontet (FR)**

(74) Mandataire : **Colas, Jean-Pierre et al**
**Cabinet de Boisse 37, avenue Franklin D. Roosevelt**
**F-75008 Paris (FR)**

EP 0 334 727 B1

**Description**

L'invention concerne un oxyde de zirconium réactif et sa préparation.

On utilise de l'oxyde de zirconium (ou zircone) en poudre, notamment pour la fabrication de composés minéraux complexes (céramiques piézoélectriques) ou de céramiques monolithiques (céramiques dites "techniques" à base de zircones stabilisées frittées).

Dans de telles applications, on a besoin d'un oxyde de zirconium "réactif", c'est-à-dire un oxyde qui tend à réagir le plus complètement possible dans les cas où la zircone doit former des composés, pour une température et un temps de réaction donnés, mais qui présente une consolidation maximale, c'est-à-dire le frittage le plus aisé pour une porosité minimale, pour une température la plus basse et en un temps le plus court possibles.

Il n'est pas possible, a priori, de définir et de mesurer de façon univoque la réactivité d'un solide pulvérulent. On la corrèle, cependant, habituellement à :
- des caractéristiques physiques mesurables par des techniques de laboratoire usuelles, telles que la surface spécifique, la taille des domaines de cohérence élémentaires (volumes dans lesquels la structure est monocristalline) et la granulométrie,
- des caractéristiques chimiques analysables, telles que la nature et la quantité d'impuretés,
- des caractéristiques physiques déterminables par des essais de simulation comme la dispersabilité (aptitude au broyage et à la dispersion).

Pour l'oxyde de zirconium, en vue des applications précitées, on recherche :
- une surface spécifique élevée (plus de 10 m²/g),
- une taille des domaines de cohérence la plus faible possible (oxydes à cristallites fins),
- une teneur en impuretés la plus faible possible, principalement pour $SiO_2$, les oxydes de métaux alcalins et les anions (sulfates, chlorures, fluorures),
- une granulométrie fine (diamètre médian de l'ordre de 1 $\mu$ m souhaité) et régulièrement répartie (proche de l'isogranulométrie).

A défaut d'obtenir un oxyde de zirconium alliant finesse et régularité directement par le procédé de préparation de cet oxyde, il faut que l'oxyde obtenu présente une dispersibilité élevée afin que, par une opération de broyage simple, on puisse assurer une désagglomération des agrégats divers et une réduction de la taille des grains individuels.

Enfin, il faut que l'oxyde de zirconium en poudre soit aisément manipulable et présente donc un faible foisonnement et un faible angle de talus, propriétés souvent difficiles à concilier avec les autres propriétés.

A ce jour, les oxydes de zirconium de qualité réactive sont fabriqués par précipitation à partir de solutions aqueuses obtenues lors de la décomposition thermochimique de précurseurs impurs riches en $ZrO_2$ (tels que les sables de silicate de zirconium). Ceci a pour conséquence de fixer des impuretés anioniques, telles que des sulfates ou chlorures, qu'on doit éliminer par calcination du produit à haute température (950°C environ). La nécessité de cette étape de calcination fait que tous les oxydes de zirconium réactifs actuellement disponibles ont un ensemble de caractéristiques communes :
- une surface spécifique variant le plus souvent entre 5 et 15 m²/g, sans dépasser 25 m²/g dans les meilleurs cas.
- les oxydes sont cristallisés sous la forme monoclinique avec des domaines de cohérence d'une taille de 40 à 80 nm.
- les particules sont constituées par des amas de 1 à 10μm formés de grains élémentaires de 0,05 à 0,5μm.

Cette dernière caractéristique explique qu'il faille souvent effectuer un broyage prolongé de ces oxydes, seuls ou en présence d'agents de broyage, avant utilisation.

EP-A-0 334 732, qui revendique la même date de priorité que la présente demande, décrit un dérivé du zirconium, soluble dans les acides, constitué d'acide méta-zirconique $ZrO(OH)_2$ dont une partie des ions $OH^-$ peut être remplacée par des ions halogénures. Le dérivé décrit peut contenir 60 à 92% de $ZrO_2$, 3 à 40% d'eau libre ou faiblement liée, et jusqu'à 5% d'ions halogénures.

EP-A-0 334 713, qui revendique la même date de priorité que la présente demande, décrit un procédé de préparation d'oxyde de zirconium hydraté à partir de zircone cristallisée granulaire. Cet oxyde de zirconium hydraté peut être considéré comme un intermédiaire dans la préparation de l'oxyde de zirconium réactif de l'invention.

US-A-3 254 949 décrit la production de zircone sous forme d'une poudre sèche, s'écoulant librement, contenant jusqu'à 15% d'eau après séchage à 110°C, par réaction exothermique d'un hydroxyde de métal alcalin avec $ZrCl_4$ ou d'un de ses produits d'hydrolyse, dissolution de la partie soluble et séchage du reste du produit. La zircone obtenue est majoritairement sous forme cristalline cubique.

La présente invention vise à fournir des oxydes de zirconium dont les caractéristiques, que l'on corrèle habituellement avec la réactivité, sont améliorées.

Plus particulièrement, l'invention fournit des oxydes de zirconium réactifs constitués de particules finement divisées dont le diamètre médian n'excède pas 10μm, caractérisés en ce qu'ils ont une structure choisie parmi la structure amorphe et la structure cristallisée sous la forme tétragonale, la taille des domaines élémentaires de cohérence dans ce dernier cas étant comprise entre 10 et 30 nm, et en ce qu'ils ont une surface spécifique B.E.T. d'au moins 30 m²/g.

Les oxydes de zirconium de l'invention ont une structure amorphe ou partiellement cristallisée. La phase cristalline prédominante est la phase tétragonale (10-30 nm). Un peu de phase monoclinique peut être présente à un taux ne dépassant pas 10%. Dans le cadre de l'invention, on appellera cependant toujours "zircone tétragonale" cette zircone.

Ils ont aussi une surface spécifique B.E.T. supérieure à 30 m² /g et pouvant atteindre 120 m² /g et plus. Le plus souvent, la surface spécifique sera comprise dans la gamme de 60 à 110 m² /g.

La granulométrie initiale des oxydes de zirconium de l'invention n'est pas sensiblement différente de celles des oxydes de zirconium précipités, mais leur dispersibilité est bien supérieure.

La pureté des oxydes de zirconium de l'invention est comparable à celle des oxydes de zirconium précipités en ce qui concerne les impuretés usuelles de type oxydes telles que $SiO_2$ et $Na_2O$, mais leur teneur en impuretés de type anions, telles que $SO_4^-$ et $Cl^-$ est inférieure. L'impureté principale dans certains cas est $H_2O$ dont la teneur peut atteindre jusqu'à 12%. On peut toutefois la réduire fortement, par exemple à 1% en poids ou moins, si la présence d'eau est rédhibitoire pour l'application visée, en utilisant une température de séchage relativement élevée, comme on le verra plus loin.

Enfin, les oxydes de zirconium de l'invention font preuve d'un foisonnement comparable à celui des oxydes de zirconium précipités de surface spécifique plus faible, ce qui fait que leur manipulation demeure aisée.

L'invention concerne aussi un procédé de préparation des oxydes de zirconium améliorés sus-définis. Ce procédé comprend les étapes consistant à :

a) faire réagir à haute température un oxyde de zirconium peu réactif avec un hydroxyde ou carbonate de métal alcalin de façon à former un zirconate de métal alcalin,

b) à hydrolyser le zirconate de métal alcalin résultant de façon à produire une suspension de l'oxyde de zirconium hydraté dans une solution concentrée d'hydroxyde de métal alcalin.

c) à séparer l'oxyde de zirconium hydraté de ladite solution concentrée et à laver l'oxyde de zirconium hydraté isolé, et

d) à sécher l'oxyde de zirconium hydraté à une température comprise dans la gamme de 110 à 570°C.

L'étape a) peut être effectuée en partant d'un oxyde de zirconium peu réactif et relativement pur, par exemple d'un oxyde naturel purifié (baddeleyite) ou d'un oxyde de zirconium "thermique" (obtenu par décomposition thermique, dans un four à haute température (1880°C), de silicate de zirconium (zircon) puis attaque chimique de la phase silicatée, comme cela est connu en soi). De tels oxydes de zirconium peu réactifs sont disponibles dans le commerce. Ils contiennent, en général, 0,06-0,7% en poids de $SiO_2$, comme impureté principale, se présentent sous forme de poudre dont les grains ont un diamètre médian de 1,5-15 μm, et ont une surface spécifique de l'ordre de 0,1-3 m²/g. On peut aussi utiliser, bien entendu, tout autre oxyde de zirconium comme matière de départ pourvu que sa pureté soit suffisante.

Comme hydroxyde ou carbonate de métal alcalin, on peut utiliser notamment les hydroxydes ou carbonates de sodium et potassium. On préfère la soude sous forme de pastilles ou de solution concentrée. On utilise habituellement un excès d'hydroxyde ou de carbonate par rapport à la stoechiométrie.

Dans le procédé utilisé, la réaction entre l'oxyde de zirconium peu réactif et l'hydroxyde ou carbonate de métal alcalin se produit à haute température, par exemple dans la gamme de 600 à 950°C. La durée de la réaction doit être suffisante pour assurer la conversion des réactifs en zirconate de métal alcalin. Cette durée variera bien entendu en fonction de la température de réaction. A titre indicatif, elle peut être de 30 mn à 10 heures.

L'étape d'hydrolyse b) consiste à mettre en contact le produit de l'étape a) avec un excès d'eau, de préférence de l'eau chaude, sous agitation. L'opération d'hydrolyse peut durer de 15 mn à 1 heure, selon les conditions opératoires (quantité d'eau utilisée, température de l'eau, conditions d'agitation).

L'étape de séparation c) peut s'effectuer de diverses manières (filtration, centrifugation, etc...) ainsi qu'il sera évident pour l'homme du métier. On préfère opérer par filtration. Le lavage subséquent peut s'effectuer simplement à l'aide d'eau afin d'éliminer les restes d'hydroxyde de métal alcalin. On peut aussi procéder à un lavage à l'aide d'une solution d'un sel d'ammonium, tel que $NH_4Cl$, pour déplacer plus rapidement le sodium résiduel.

L'étape d) a une grande influence sur la qualité du produit final. Pour éviter la présence de quantités d'eau résiduelle importantes, il convient de conduire le séchage à une température d'au moins 110°C. Il faut éviter de dépasser cependant une température de 570°C car, au-delà, le produit est le siège d'une cristallisation sous forme monoclinique qui abaisse sa surface spécifique. Le choix de la température de séchage a une influence sur la forme de l'oxyde de zirconium finalement obtenu. Pour des températures de séchage allant jusqu'à environ 400°C, l'oxyde de zirconium est obtenu sous forme amorphe. Pour des températures de séchage supérieures, il est partiellement cristallisé sous forme tétragonale. La teneur en eau de l'oxyde de zirconium s'abaisse également à mesure que la température de séchage augmente dans l'intervalle de 110 à 450°C environ, pour se stabiliser ensuite. Inversement, la surface spécifique tend à diminuer lorsque la température de séchage augmente. Si l'on désire donc un produit à très haute surface spécifique on choisira une température de séchage relativement basse tandis que si l'on désire un produit à teneur réduite en eau, on choisira une température de séchage relativement élevée. On peut toutefois obtenir un bon compromis en utilisant une température de séchage dans la gamme de 350 à 450°C environ.

La durée de l'étape de séchage est de l'ordre de quelques heures (par exemple 5 à 10 heures) et variera en fonction de la température sélectionnée.

Après séchage ou avant utilisation, on peut soumettre l'oxyde de zirconium obtenu à une opération de broyage afin de réduire la grosseur des particules, opération rendue aisée grâce à la bonne dispersibilité de l'oxyde de zirconium réactif de l'invention.

Le procédé de l'invention est très économique compte tendu de la large disponibilité des oxydes de zirconium thermiques à bas prix.

Les exemples non limitatifs suivants sont donnés en vue d'illustrer l'invention.

Exemple 1.

On mélange 55 parties en poids d'oxyde de zirconium thermique contenant 0,4-0,5% de $SiO_2$ et ayant une grosseur de particules moyenne de 4 µm environ, vendu par la Société Européenne des Produits Réfractaires, et 45 parties en poids de NaOH sous forme de pastilles. On cuit le mélange à 850°C pendant 1 heure de façon à obtenir un mélange de zirconate de sodium et de soude en excès. Le mélange réactionnel est mis en contact avec 250 parties d'eau à 60°C et on agite le tout pendant environ 1 heure. On filtre la suspension résultante sur un filtre sous pression entre 1 et 4 bars, puis on lave la matière solide retenue par le filtre avec 2000 parties d'eau environ. Après ce lavage à l'eau, le produit est lavé à deux reprises par une solution aqueuse de chlorure d'ammonium (100 g de $NH_4Cl$/litre) en utilisant 300 parties de solution à chaque fois. On sèche enfin le produit pendant 8 heures à 420°C dans un four. Les caractéristiques de l'oxyde de zirconium obtenu sont données dans le tableau I, colonne A.

Exemple 2.

On répète le mode opératoire de l'exemple 1 si ce n'est que l'on part d'un oxyde de zirconium thermique contenant 0,12% de $SiO_2$ et d'une grosseur de particules moyenne de 2,5 µm environ vendu par la Société Européenne des Produits Réfractaires, et qu'après le lavage à l'eau, on lave le produit à quatre reprises avec 300 parties de la solution de $NH_4Cl$, à chaque fois, puis finalement une fois avec de l'eau (2000 parties). On sèche enfin le produit, dans une étuve, pendant 8 heures à 130°C sous 50-75% d'humidité relative. Les caractéristiques de l'oxyde de zirconium obtenu sont données dans le tableau I, colonne B.

Exemple 3.

On répète le mode opératoire de l'exemple 2, si ce n'est que l'on effectue un séchage de 8 heures à 450°C. Les caractéristiques de l'oxyde de zirconium obtenu sont données dans le tableau I, colonne C.

Dans le tableau I ci-après, on a indiqué aussi, à titre comparatif, les caractéristiques de six oxydes de zirconium réactifs disponibles dans le commerce (colonne D à I).

Le tableau I montre bien la supériorité des produits de l'invention eu égard à la surface spécifique et à la teneur en anions $SO_4^{2-}$.

TABLEAU I - CARACTERISTIQUES COMPAREES DES OXYDES DE Zr

| OXYDE | selon l'invention | | | selon l'art antérieur | | | | | |
|---|---|---|---|---|---|---|---|---|---|
| | A | B | C | D | E | F | G | H | I |
| Analyse chimique, % pondéraux | | | | | | | | | |
| SiO$_2$ | 0,40 | 0,09 | 0,09 | 0,35 | 0,17 | 0,23 | 0,10 | 0,10 | 0,01 |
| Na$_2$O | 0,09 | 0,05 | 0,05 | 0,06 | 0,01 | 0,01 | 0,06 | 0,01 | 0,005 |
| SO$_4^{2-}$ | - | - | - | 0,15 | 0,14 | 0,25 | 0,15 | 0,16 | - |
| Cl$^-$ | 0,10 | 0,05 | 0,05 | 0,08 | 0,02 | 0,02 | - | - | 0,28 |
| H$_2$O | 0,50 | 9,0 | 0,50 | 0,05 | 0,10 | 0,40 | 0,45 | 0,41 | 0,20 |
| Diamètre médian des particules, μm | 4,3 | 1,0 | 1,1 | 4,7 | 5,6 | 1,7 | 1,1 | 0,5 | 1,0 |
| Surface Spécifique BET (m$^2$/g) | 95 | 130 | 60 | 6,0 | 6,5 | 9,6 | 22 | 21 | 5,6 |
| Phase cristalline | * | ** | * | *** | *** | *** | *** | *** | 90% *** +10%* |
| Taille des domaines élémentaires, nm | 20 | | 25 | 60 | 70 | 60 | 43 | 47 | 35 |

*tétragonale - ** amorphe - *** monoclinique

D : Zircone de la Société Européenne des Produits Réfractaires obtenue selon le procédé usuel de précipitation de sulfate basique et déplacement.

E, F : Zircones E 20 et E 16, respectivement, de la Société Magnesium Elektron Ltd.

G : Zircone DK1 de la Société DAICHI KIGENSO DK

H : Zircone DK de la Société HARSHAW

I : Zircone UHP, de la Société CRICERAM

Exemple 4.

On a répété le mode opératoire de l'exemple 2, si ce n'est qu'on a fait varier la température de séchage. Le tableau II ci-dessous résume les propriétés (teneur en eau, surface spécifique, forme) des oxydes de zirconium obtenus.

## TABLEAU II - EVOLUTION DES CARACTERISTIQUES DE L'OXYDE DE ZIRCONIUM SELON LA TEMPERATURE DE SECHAGE

| Température de séchage (°C) | Teneur en eau (% poids) | Surface spécifique BET $m^2/g$ | Phases présentes |
|---|---|---|---|
| 130 (Exemple 2) | 9 | 130 | Amorphe |
| 300 | 5 | 110 | Amorphe |
| 400 | 1 | 100 | Amorphe |
| 450 | 0,5 | 60 | Tétragonale + Amorphe |
| 500 | 0,5 | 30 | Tétragonale + Amorphe |
| 600* | 0,5 | 10 | 75% tétragonale + 25% monoclinique dans la phase cristallisée + traces de phase amorphe |

\* Hors du cadre de l'invention.

On voit que le meilleur compromis eu égard à la teneur en eau et à la surface spécifique est obtenu pour les températures de séchage de 400 à 450°C.

Exemple 5.

On a mesuré le foisonnement des oxydes de zirconium A et C des exemples 1 à 3 comparativement à ceux des oxydes du commerce E, F et I du tableau I. Le foisonnement a été mesuré à l'aide d'un combiné d'analyses pour poudres du type HOSOKAWA vendu par la Société HOSOKAMA EUROPE LIMITED, Buckinghamshire (Grande-Bretagne).

Les résultats obtenus sont récapitulés dans le tableau III ci-après.

## TABLEAU III - FOISONNEMENT D'OXYDES DE Zr

| Oxyde | Selon l'invention | | Art antérieur | | |
|---|---|---|---|---|---|
| | A | C | E | F | I |
| Porosité (%) sur poudre non tassée | 88 | 93 | 75 | 87 | 88 |
| sur poudre tassée | 78 | 82 | 66 | 80 | 80 |
| Surface spécifique BET ($m^2/g$) | 95 | 60 | 6,5 | 9,6 | 5,6 |

Exemple 6.

On a mesuré comparativement la dispersibilité de l'oxyde de zirconium A de l'exemple 1, à celle d'un oxyde de zirconium produit selon la pratique antérieure (exemple D).

L'essai consistait à comparer la dispersibilité d'oxydes de Zr en les broyant, à conditions constantes, dans un microdisperseur continu en voie humide. L'évolution de la courbe granulométrique était mesurée.

Le microdisperseur était un appareil KD Pilot (fabriqué par la Société W.A. BACHOFEN) (vitesse 10 m/s, charge broyante formée de billes de céramique électrofondue d'une grosseur de O,8-1,25 mm).

La suspension aqueuse de $ZrO_2$ avait une concentration pondérale de 3O% et son débit de passage dans le broyeur était de 3O l/h (soit environ 12 kg/h de solides).

La granulométrie était évaluée avant et après passage dans l'appareil par sédimentation (Sedigraph 5000 COULTRONICS).

| Granulométrie * | Zircone exemple A selon l'invention | | Zircone de l'art antérieur | |
|---|---|---|---|---|
| | Avant | Après | Avant | Après |
| $\emptyset_{50}$ ($\mu$m) | 4,30 | 0,9 | 4,70 | 1,2 |
| $\emptyset_{90}$ ($\mu$m) | 13,0 | 2,95 | 12,5 | 5,8 |
| $\emptyset_{10}$ ($\mu$m) | 0,59 | 0,27 | 0,62 | 36,0 |
| % < 1 $\mu$m | 21,5 | 55,0 | 17,5 | 36,0 |
| % < 2 $\mu$m | 31,5 | 84,0 | 26,0 | 52,5 |
| % < 4 $\mu$m | 47,5 | 97,0 | 44,0 | 80,0 |
| % < 8 $\mu$m | 74,0 | 98,0 | 73,5 | 95,5 |

* $\emptyset_x$ est le diamètre correspondant à x% de passant.

Malgré une granulométrie initiale très proche, les deux oxydes se distinguent nettement après broyage. L'oxyde A a une granulométrie sensiblement plus fine et nettement plus isogranulométrique. La "pente" de la courbe ($\emptyset_{90}$-$\emptyset_{10}$) est de 2,08 $\mu$m pour l'oxyde (A) et 5,49 $\mu$m pour l'oxyde selon la technique antérieure.

**Revendications**

1. Oxyde de zirconium réactif sous forme de particules fines dont le diamètre médian n'excède pas 10$\mu$m, caractérisé en ce qu'il a une structure choisie parmi la structure amorphe et une structure cristallisée constituée de façon prédominante par la forme cristalline tétragonale, la taille des domaines élémentaires de cohérence dans ce dernier cas étant comprise entre 10 et 30 nm, et en ce qu'il a une surface spécifique B.E.T. d'au moins 30 m² /g.

2. Oxyde de zirconium réactif selon la revendication 1, caractérisé en ce qu'il a une surface spécifique dans la gamme de 60 à 110 m² /g.

3. Oxyde de zirconium réactif selon la revendication 1 ou 2, caractérisé en ce qu'il est sous forme tétragonale et présente une taille des domaines élémentaires comprise entre 10 et 30 nm.

4. Oxyde de zirconium réactif selon l'une quelconque des revendications 1 à 3, caractérisé en ce qu'il a une teneur en eau égale à 1% en poids ou moins.

5. Procédé de préparation d'un oxyde de zirconium réactif, caractérisé en ce qu'il comprend les étapes consistant à :
   a) faire réagir à haute température un oxyde de zirconium peu réactif avec un hydroxyde ou carbonate de métal alcalin de façon à former un zirconate de métal alcalin,

b) à hydrolyser le zirconate de métal alcalin résultant de façon à produire une suspension d'oxyde de zirconium hydraté dans une solution concentrée d'hydroxyde de métal alcalin,
c) à séparer l'oxyde de zirconium hydraté de ladite solution concentrée et à laver l'oxyde de zirconium hydraté isolé, et
d) à sécher l'oxyde de zirconium hydraté à une température comprise dans la gamme de 110 à 570°C.

6. Procédé selon la revendication 5, caractérisé en ce qu'on part d'un oxyde de zirconium peu réactif, obtenu par décomposition à haute température de zircon, puis attaque chimique de la phase silicatée.

7. Procédé selon la revendication 5 ou 6, caractérisé en ce qu'on utilise de la soude comme hydroxyde de métal alcalin.

8. Procédé selon l'une quelconque des revendications 5 à 7, caractérisé en ce que l'étape de lavage comprend au moins un lavage à l'eau suivi d'au moins un lavage à l'aide d'une solution de chlorure d'ammonium.

9. Procédé selon l'une quelconque des revendications 5 à 8, caractérisé en ce que l'étape de séchage est effectuée à une température comprise dans la gamme de 350 à 450°C environ.

10. Procédé selon l'une quelconque des revendications 5 à 9, caractérisé en ce qu'il comprend, en outre, une étape de broyage finale.


**Patentansprüche**

1. Reaktives Zirkoniumoxid in der Form von feinen Teilchen, deren mittlerer Durchmesser 10$\mu$m nicht überschreitet, dadurch gekennzeichnet, daß es eine unter der amorphen und der kristallinen Struktur ausgewählte Struktur in der Art hat, bei welcher die kristalline tetragonale Form vorherrscht, wobei die Größe der elementaren Kohärenzbereiche im letzten Fall zwischen 10 und 30 nm liegt, und daß es eine spezifische Oberfläche B.E.T. von wenigstens 30 $m^2$/g hat.

2. Reaktives Zirkoniumoxid nach Anspruch 1, dadurch gekennzeichnet, daß seine spezifische Oberfläche im Bereich von 60 bis 110 $m^2$/g liegt.

3. Reaktives Zirkoniumoxid nach einem der Ansprüche 1 oder 2, dadurch gekennzeichnet, daß es in der tetragonalen Form vorliegt und die Größe der Elementarbereiche zwischen 10 und 30 nm liegt.

4. Reaktives Zirkoniumoxid nach mindestens einem der Ansprüche 1 bis 3, dadurch gekennzeichnet, daß es einen Wassergehalt von 1 Gew.-% oder weniger hat.

5. Verfahren zur Herstellung eines reaktiven Zirkoniumoxides, dadurch gekennzeichnet, daß es die folgenden Stufen aufweist:
a) daß man ein wenig reaktives Zirkoniumoxid auf einer hohen Temperatur mit einem Hydroxid oder einem Alkalimetallkarbonat in der Weise reagieren läßt, daß sich ein Alkalimetallzirkonat bildet,
b) daß man das entstandene Alkalimetallzirkonat derartig hydrolysiert, daß sich eine Suspension des hydratisierten Zirkoniumoxides in einer konzentrierten Lösung des Alkalimetallhydroxid bildet,
c) daß man das hydratisierte Zirkoniumoxid von der konzentrierten Lösung trennt und das hydratisierte isolierte Zirkoniumoxid auswäscht, und
d) daß man das hydratisierte Zirkoniumoxid auf einer Temperatur trocknet, die im Bereich zwischen 110 und 570 °C liegt.

6. Verfahren nach Anspruch 5, dadurch gekennzeichnet, daß man den wenig reaktiven Zirkoniumoxidpart, welchen man durch Zerfall bei hoher Temperatur aus Zirkon erhält, sodann mit der Silikatphase chemisch reagieren läßt.

7. Verfahren nach mindestens einem der Ansprüche 5 oder 6, dadurch gekennzeichnet, daß man Soda oder ein Alkalimetallhydroxid verwendet.

8. Verfahren nach mindestens einem der Ansprüche 5 bis 7, dadurch gekennzeichnet, daß die Waschstufe wenigstens eine Waschstufe mit Wasser aufweist, welcher wenigstens ein Waschvorgang mit Hilfe einer Lösung aus Amoniumchlorid folgt.

9. Verfahren nach mindestens einem der Ansprüche 5 bis 8, dadurch gekennzeichnet, daß die Stufe des Trocknens bei einer Temperatur durchgeführt wird, die sich im Bereich von ungefähr 350 bis ungefähr 450 °C bewegt.

10. Verfahren nach mindestens einem der Ansprüche 5 bis 9, dadurch gekennzeichnet, daß weiterhin eine Feinzer-kleinerungsstufe durchgeführt wird.

**Claims**

1. A reactive zirconium oxide in the form of fine particles whose median diameter does not exceed 10 $\mu$m, which has a structure chosen from the amorphous structure and a crystalline structure comprised predominantly of the tetragonal crystalline form, the size of the elementary coherence regions in the latter case being between 10 and 30 nm, and which has a B.E.T. surface area of at least 30 $m^2/g$.

2. The reactive zirconium oxide as claimed in claim 1, which has a surface area within the range of 60 to 110 $m^2/g$.

3. The reactive zirconium oxide as claimed in claim 1 or 2, which is in a tetragonal form and has an elementary region size of between 10 and 30 nm.

4. The reactive zirconium oxide as claimed in any of claims 1 to 3, which has a water content equal to 1% by weight or less.

5. A process for the preparation of a reactive zirconium oxide, which comprises the steps consisting of ;
   a) reacting a relatively unreactive zirconium oxide at a high temperature with an alkali metal hydroxide or carbonate so as to form an alkali metal zirconate,
   b) hydrolyzing the resultant alkali metal zirconate so as to produce a suspension of zirconium oxide hydrate in a concentrated solution of alkali metal hydroxide,
   c) separating the zirconium oxide hydrate from the said concentrated solution and washing the zirconium oxide hydrate isolated, and
   d) drying the zirconium oxide hydrate at a temperature in the range from 110 to 570°C.

6. The process as claimed in claim 5, wherein the starting material is a relatively unreactive zirconium oxide produced by decomposing zircon at high temperature, then by chemically attacking the silicate phase.

7. The process as claimed in claim 5 or 6, wherein sodium hydroxide is employed as an alkali metal hydroxide.

8. The process as claimed in any of claims 5 to 7, wherein the washing step comprises at least one washing with water followed by at least one washing with the aid of an ammonium chloride solution.

9. The process as claimed in any of claims 5 to 8, wherein the drying step is performed at a temperature within the range approximately from 350 to 450°C.

10. The process as claimed in any of claims 5 to 9, which additionally comprises a final grinding step.